# EUROPÄISCHE PATENTSCHRIFT

(11) **EP 1 683 596 B1**
(45) Veröffentlichungstag und Bekanntmachung des Hinweises auf die Patenterteilung: **01.04.2009**
(21) Anmeldenummer: 05027473.7
(22) Anmeldetag: 15.12.2005
(51) Int. Cl.: B23B 31/16

(54) **Spanneinsatz für Spannbacken**
Clamping-claw insert for clamping jaws
Insert de serrage pour mors de serrage

(30) Priorität: 22.01.2005 DE 102005003034
(43) Veröffentlichungstag der Anmeldung: 26.07.2006
(73) Patentinhaber: SMW-AUTOBLOK Spannsysteme GmbH, 88074 Meckenbeuren (DE)
(72) Erfinder: Rehm, Fritz, Dipl.-Ing., 88094 Oberteuringen (DE)
(74) Vertreter: Engelhardt, Guido

(56) Entgegenhaltungen:
- DE-A1- 3 122 876
- DE-A1- 3 810 854
- GB-A- 1 357 376

## Beschreibung

Die Erfindung bezieht sich auf einen Spanneinsatz für Spannbacken von Spannvorrichtungen, insbesondere von Spannfuttern, der aus einem in einer in den Spannbacken eingearbeiteten Ausnehmung einsetzbaren und lösbar mit diesem verbindbaren Grundkörper besteht, an dem ein oder mehrere über die Spannfläche vorstehende auf ein Werkstück einwirkende Spannzähne angeformt sind.

Spannkralleneinsätze dieser Art sind durch die DE 38 10 854 C2 bekannt. Die Grundkörper dieser Spannkralleneinsätze sind hierbei als Walzenkörper ausgebildet, so dass diese gleitend um ihre Längsachse zur Drehachse des Werkzeuges drehbeweglich gelagert sind. Außerdem sind an dem Spanneinsatz lediglich zwei mit seitlichem Abstand in Umfangsrichtung zueinander angeordnete Spannzähne vorgesehen, so dass ein Werkstück nur durch die Spannzähne der Spanneinsätze in einem Spannfutter gehalten ist.

Aus der DE 31 22 876 A1 sind des Weiteren Spanneinsätze gemäss dem Oberbegriff von Anspruch 1 bekannt, die in Axialführungen eines Spannaufsatzes eingesetzt sind und eine Spannverzahnung aus einem oder mehreren Zähnen aufweisen.

Bei diesen Ausgestaltungen ist von Nachteil, dass die Eindringtiefe der Spannzähne in ein einzuspannendes Werkstück nicht eingestellt werden kann, diese dringen vielmehr in Abhängigkeit von der auf die Spannbacken einwirkenden Kraft mehr oder weniger tief in das Werkstück ein. Bei zu geringer Eindringtiefe kann demnach mitunter eine ausreichende Halterung des Werkstückes nicht gegeben sein, bei einer zu hohen Spannkraft dagegen kann das Werkstück in unzulässiger Weise verformt oder beschädigt werden. Auch werden die Spannzähne vielfach hoch beansprucht und unterliegen dadurch bedingt einem hohen Verschleiß. Eine zufriedenstellende Einspannung eines Werkstückes ist somit mit den bekannten Spannkralleneinsätzen oftmals nicht zu erzielen.

Aufgabe der Erfindung ist es daher, einen Spanneinsatz für Spannbacken der vorgenannten Gattung zu schaffen, der nicht nur leicht zu montieren ist und eine hohe Standzeit aufweist, sondern bei dem die Eindringtiefe der Spannzähne in das Werkstück vorgegeben und an den jeweiligen Einsatzzweck angepasst werden kann. Außerdem soll die Herstellung der Spanneinsätze und die diesen zugeordneten Ausnehmungen im Spannbacken kostengünstig vorzunehmen sein, dennoch sollen die Spanneinsätze sehr maßhaltig sein und eine lagegenaue Einspannung eines Werkstückes ermöglichen.

Gemäß der Erfindung wird dies bei einem Spanneinsatz der eingangs genannten Gattung dadurch erreicht, dass der Grundkörper auf der mit einem oder mehreren Spannzähnen versehenen dem einzuspannenden Werkstück zugewandten Stirnfläche eine gegenüber diesen zurückgesetzte als Anschlag ausgebildete Anlagefläche aufweist.

Durch den an dem Spanneinsatz vorgesehenen Anschlag sichergestellt, dass die Spannzähne nur um eine vorgegebene wählbare Tiefe in das Werkstück bis zur Anlage des Anschlages an diesem eindringen und somit Verformungen und Beschädigungen des Werkstückes demnach zuverlässig vermieden sind, eine sichere form- und reibschlüssige Einspannung aber gewährleistet ist.

Zweckmäßig ist es hierbei, den Grundkörper des Spanneinsatzes in Form eines Quaders auszubilden und in einer an diesen angepassten in den Spannbacken eingearbeiteten Ausnehmung einzusetzen.

Des Weiteren sollte die der mit dem Anschlag versehenen Stirnfläche gegenüber liegende Außenfläche des Grundkörpers durch eine die beiden Seitenflächen verbindende Zylinderfläche gebildet, und die beiden Seitenflächen und die Zylinderfläche des Grundkörpers sollten in Richtung der vorderen Stirnfläche des Spanneinsatzes sich stetig verjüngend ausgebildet sein, wobei die Seitenflächen und die Zylinderfläche unter einem Winkel γ von 10 bis 20°, vorzugsweise von ca. 15°, geneigt verlaufend ausgebildet sein sollten.

Zweckmäßig ist es ferner, den Anschlag des Grundkörpers ausgehend von der vorderen Stirnfläche des Spanneinsatzes vor den Spannzähnen anzuordnen und durch eine Anschlagleiste zu bilden, die mit Abstand zu der vorderen Stirnfläche des Grundkörpers und achssenkrecht zur Längsachse des Spanneinsatzes verläuft.

Um das eingespannte Werkstück in Richtung der Spannvorrichtung zu ziehen, sollten die Spannzähne in Richtung der Längsachse des Grundkörpers im Querschnitt in Form eines Trapezes oder dreieckförmig ausgebildet sein, wobei die der vorderen Stirnfläche des Spanneinsatzes zugewandte Zahnfläche der Spannzähne unter einem stumpfen Winkel α und die der rückseitigen Anlagefläche des Spanneinsatzes zugewandte Stirnfläche der Spannzähne unter einem spitzen Winkel β gegenüber dem Anschlag geneigt verlaufend ausgebildet sein und die Neigungswinkel α und β der Zahnflächen etwa 75 ° bis 85 ° bzw. etwa zwischen 25 ° und 35 ° betragen sollten.

Nach einer andersartigen Ausgestaltung können die Spannzähne des Grundkörpers auch durch eine oder mehrere achsparallel zur Längsachse des Spanneinsatzes verlaufende durchgehende oder unterbrochene Zahnleisten gebildet sein, wobei vorzugsweise die Spannzähne aus einer mittig an der dem einzuspannenden Werkstück zugewandten Stirnfläche des Spanneinsatzes vorgesehene Zahnleiste oder aus zwei mit seitlichem Abstand zueinander angeordnete und achsparallel zur Längsachse des Spanneinsatzes verlaufende Zahnleisten bestehen können.

Zweckmäßig ist es hierbei des Weiteren, um ein besonders hohes Drehmoment übertragen zu können, die dem einzuspannenden Werkstück zugewandten Stirnflächen der Spannzähne ganz oder teilweise konvex gekrümmt auszubilden. Auch sollte die dem Werkstück zugekehrte Stirnfläche des Spanneinsatzes ein- oder beidseits eines Spannzahnes und/oder zwischen mehreren Spannzähnen als konvex gekrümmte Anlagefläche ausgebildet sein. Bei zwei mit seitlichem Abstand zueinander an der Stirnfläche vorgesehenen Spannzähnen ist es angebracht, zwischen diesen eine konvex gekrümmte Anlagefläche als Anschlag vorzusehen.

Um die durch die Spannzähne beim Einspannen hervorgerufenen Materialanhäufungen an einem Werkstück aufnehmen zu können, sollte zwischen den Spannzähnen und der Anschlagleiste bzw. den als Zahnleisten ausgebildeten Spannzähnen und dem Anschlag senkrecht zur Längsachse des Spanneinsatzes bzw. parallel zu dieser verlaufend ein Freiraum vorgesehen sein, der gegenüber dem Anschlag zurückgesetzt, vorzugsweise als Hohlkehle ausgebildet ist. Des Weiteren können die Spannzähne und die Anschlagleiste durch seitliche an den Grundkörper angearbeitete Abschrägungen freigespart sein.

Der Spanneinsatz ist zweckmäßigerweise mittels einer in einer mit einem kegelstumpfartig ausgebildeten Anlagefläche versehenen Bohrung abgestützten und in eine in den Spannbacken eingearbeiteten Gewindebohrung eingreifenden Torx-Schraube an diesem zu befestigen ist.

Bei dieser Ausgestaltung sollte die Längsachse der in dem Spannbacken vorgesehenen Gewindebohrung geringfügig gegenüber der Längsachse der Bohrung des in dem Spannbacken abgestützten Spanneinsatzes radial nach außen versetzt angeordnet sein, so dass der Spanneinsatz mit den Seitenflächen und vor allem mit der Zylinderfläche unter Vorspannung an Gegenflächen des Spannbackens anliegt.

Zur Einstellung des Backenrundlaufes eines Spannfutters ist es ferner angebracht, den den Spanneinsatz aufnehmenden Spannbacken mit einem Einsatzstück zu versehen, über das der Spannbacken auf einem an einem zugeordneten Grundbacken vorgesehenen Querkeil abgestützt ist. Das Einsatzstück kann hierbei aus einer im Querschnitt U-förmig ausgebildeten Schiene bestehen, die in einer auf der dem Querkeil zugekehrten Rückseite des Spannbackens in diesen eingearbeitete Ausnehmung eingesetzt und mittels einer Spannschraube mit dem Spannbacken auswechselbar verbunden ist, so dass durch Austausch des Einsatzstückes ein mangelhafter Rundlauf auszugleichen ist.

Um den Verschleiß zu reduzieren, sollte der Spanneinsatz zumindest auf der dem einzuspannenden Werkstück zugekehrten Stirnfläche mit einer reibmindernden Beschichtung, beispielsweise aus Titan-Nitrit, versehen sein, auch sollte der Grundkörper des Spanneinsatzes aus hochlegiertem gehärteten Werkzeugstrahl bestehen, und die Spannzähne sowie die Anschlagleiste sollten auf der dem einzuspannenden Werkstück zugekehrten Stirnfläche durch Funken-Erosion aus einem Rohling herzausgearbeitet sein.

Wird ein Spanneinsatz gemäß der Erfindung ausgebildet, so ist gewährleistet, dass mittels einer Spannvorrichtung, die mit derartigen Spanneinsätzen bestückt ist, ein Werkstück form- und reibschlüssig einzuspannen ist, ohne dass die Gefahr besteht, dass eine unzureichende oder zu hohe Spannkraft auf dieses einwirkt und dadurch bedingte Beschädigungen in Kauf zu nehmen sind. Durch den an den Spanneinsätzen vorgesehenen Anschlag ist nämlich sichergestellt, dass die Spannzähne auch bei hoher Spannkraft nur entsprechend des gewählten Überstandes über den Anschlag in das Werkstück eindringen und dieses somit nur geringfügig verformt wird. Durch das Eindrücken der Spannzähne in das Werkstück ist aber stets gewährleistet, dass dieses auch bei geringer Spannkraft zwischen den Spannbacken fest eingespannt ist und entsprechend bearbeitet werden kann.

Da die Eindringtiefe der Spannzähne mit Hilfe des Anschlages entsprechend dem zu bearbeitenden Werkstück gewählt werden kann und demnach bekannt ist, kann dessen Bearbeitungszugabe ebenfalls vorgegeben werden, so dass die Nachbearbeitung eines Werkstückes nur einen minimalen Aufwand erfordert. Des Weiteren sind eine hohe Maßgenauigkeit der Spanneinsätze und eine hohe Standzeit aufgrund der vorschlagsgemäßen Ausbildung gegeben, vor allem aber ist durch die vorgesehene Ausbildung der Spannzähne als Haken ein Niederzug erzielbar, d.h., das eingespannte Werkstück wird beim Eindringen durch die Spannzähne in Richtung der Spannvorrichtung gezogen. Werden dagegen die Spannzähne in Form von achsparallel gerichteten Zahnleisten gestaltet, können hohe Drehmomente in Umfangsrichtung auf ein Werkstück übertragen werden.

Auch kann die Rundlaufgenauigkeit der Spannvorrichtung mit Hilfe des Einssatzstückes leicht korrigiert werden, ohne dass dazu Backen auszudrehen sind. Eine mit vorschlagsgemäß ausgebildeten Spanneinsätzen ausgestattete Spannvorrichtung ermöglicht somit unabhängig von der Höhe der Spannkräfte eine an das jeweils zu bearbeitende Werkstück angepasste ausreichende Einspannung, ohne dass Beschädigungen des Werkstückes auftreten und bei der Bearbeitung des Spanneinsatzes und der diesem zugeordneten Ausnehmung im Spannbacken hohe Kosten entstehen.

In der Zeichnung ist ein Ausführungsbeispiel eines gemäß der Erfindung ausgebildeten Spanneinsatzes dargestellt, das nachfolgend im Einzelnen erläutert ist. Hierbei zeigt:
- Figur 1: eine Spannvorrichtung mit in deren Spannbacken eingesetztem Spanneinsatz beim Einstellen des Rundlaufes, teilweise in einem Axialschnitt,
- Figur 2: den Spannbacken.nach Figur 1 mit einem eingespannten Werkstück, in einer vergrößerten Darstellung,
- Figur 3: einen Ausschnitt aus Figur 2 in nochmals vergrößerter Wiedergabe,
- Figur 4: den Spannbacken mit Spanneinsatz nach Figur 1 in Vorderansicht,
- Figur 5: den in den Spannbacken nach Figur 1 eingesetzten Spanneinsatz in einer vergrößerten isometrischen Darstellung,
- Figur 6: einen Spanneinsatz mit in dessen Längsachse verlaufenden Spannzähnen Und einem Anschlag,
- Figur 7: den Spanneinsatz nach Figur 6 in einer isometrischen Darstellung und
- Figur 8: eine andersartige Befestigung des Spanneinsatzes bei dem Spannbacken nach Figur 1.

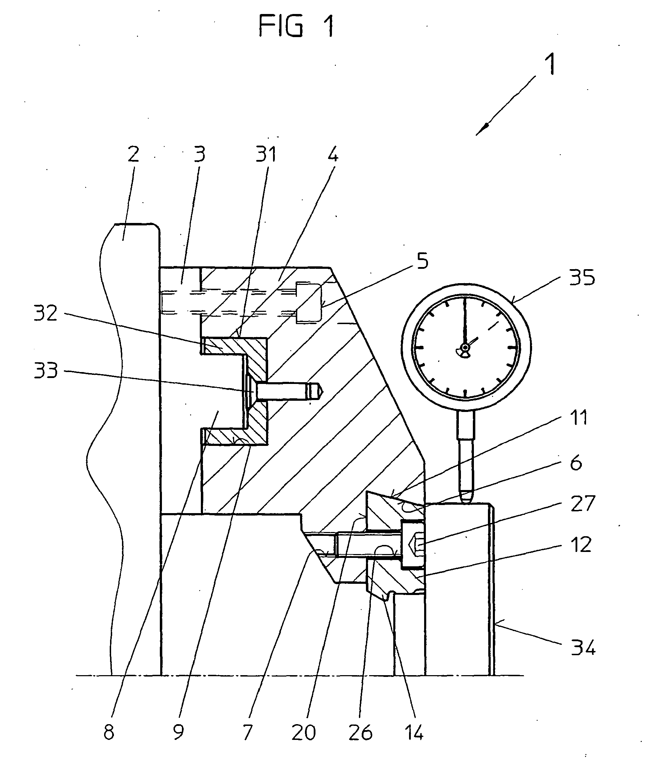

Die in Figur 1 dargestellte und mit 1 bezeichnete Spannvorrichtung dient zur Einspannung von Werkstücken mittels eines Spannfutters 2, dessen radial verstellbare Spannbacken 4 auf das einzuspannende Werkstück einwirken. Die Spannbacken 4 sind hierbei mittels Schrauben 5 jeweils an einem Grundbacken 3 befestigt, die radial verstellbar in einem Futterkörper des Spannfutters 2 angeordnet sind.

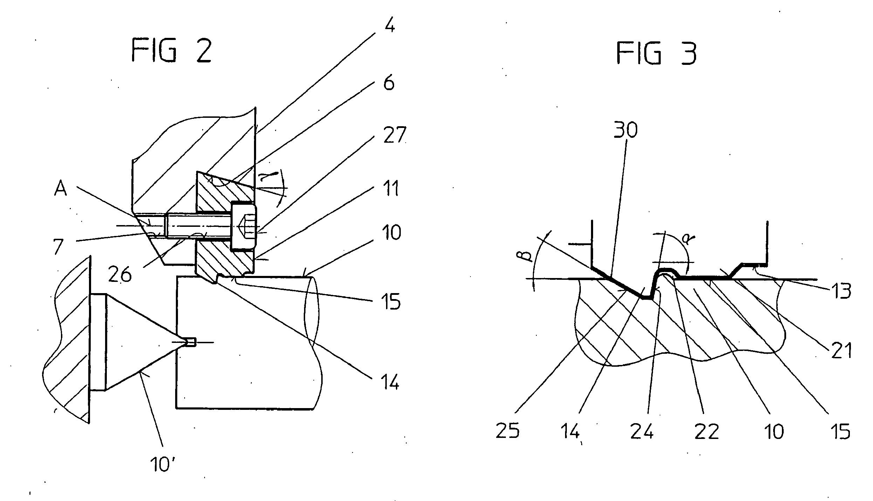

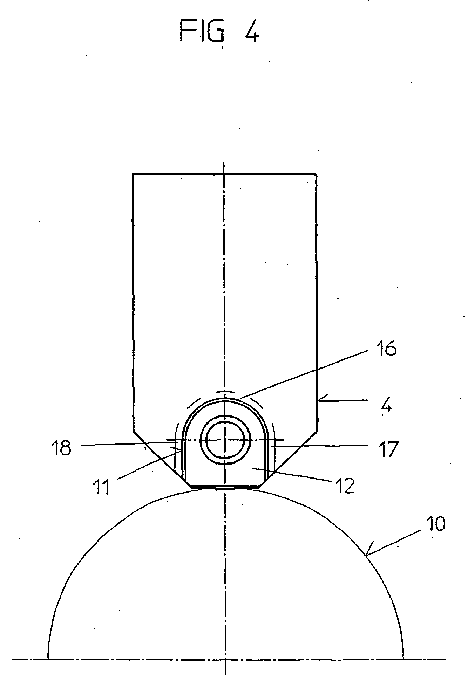

Um ein Werkstück 10 form- und reibschlüssig zu halten, wie dies in den Figuren 3 und 4 gezeigt ist - das Werkstück 10 ist hierbei zwischen Spitzen 10' eingespannt -, ist in einer Ausnehmung 6 der Spannbacken 4 jeweils ein Spanneinsatz 11 eingesetzt, der mittels einer in einer Gewindebohrung 7 eingreifenden Zylinderkopfschraube 27 an dem Spannbacken 4 auswechselbar befestigt ist. Die Längsachse der Gewindebohrung 7 symbolisiert hierbei die Längsachse A des Spanneinsatzes 11. Die Zylinderkopfschraube 26 durchgreift eine in den Spanneinsatz 11 eingearbeitete Stufenbohrung 26 und stützt sich an diesem ab, so dass der Spanneinsatz 11 mit seiner rückwärtigen Anlagefläche 20 gegen den Spannbacken 4 gepresst wird.

Der Spanneinsatz 11 besteht aus einem quaderförmigen Grundkörper 12, an dessen dem Werkzeug 10 zugekehrten Stirnfläche 13 ein senkrecht zur Längsachse A gerichteter Spannzahn 14 sowie ein Anschlag 15 angearbeitet sind. Die diesen gegenüberliegende Fläche des Grundkörpers 12 ist als Zylinderfläche 16 ausgebildet, die beiden Seitenflächen 17 und 18 des Grundkörpers 12 sind dagegen plan gestaltet.

Die Zylinderfläche 16 wie auch die beiden Seitenflächen 17 und 18 des Grundkörpers 12 sind gegenüber der Längsachse A des Spanneinsatzes 11 unter einem Winkel von 15° geneigt ausgebildet, in gleicher Weise sind auch die Gegenflächen der den Spanneinsatz 11 aufnehmenden Ausnehmung 6 gestaltet. Auf diese Weise wird einem Aufbiegen des Spanneinsatzes 12 entgegengewirkt.

Die Spannzähne 14 sind bei dem gezeigten Ausführungsbeispiel im Querschnitt trapezförmig gestaltet, so dass die Zahnflächen 24 und 25 des Spannzahnes 14 unter einem Winkel α bzw. β geneigt zu dem Anschlag 15 verlaufen. Der stumpfe Winkel α beträgt bei dem gezeigten Ausführungsbeispielen 85°, der spitze Winkel β dagegen nur ca. 15°. Beim Eindrücken des Spannzahnes 14 in das Werkstück 10 wird somit durch die Abweiskraft der Spanneinsatz 11 in Richtung des Spannfutters 2 gedrückt, so dass durch den dadurch hervorgerufenen Niederzug einem unerwünschten Öffnen des Spannbackens 4 entgegengewirkt wird.

Das beim Eindrücken des Spannzahnes 14 in das Werkzeug 10 verdrängte Material wird in einem Freiraum 22 aufgenommen, der zwischen dem Spannzahn 14 und dem Anschlag 15 in den Grundkörper 12 eingearbeitet ist. Das verdrängte Material verursacht demnach keine Verzwängungen des Werkstückes 10 und/oder des Spannbackens 4, zumal der Anschlag 15 von der vorderen Stirnfläche 19 des Spanneinsatzes 11 gesehen, als vor dem Spannzahn 14 senkrecht zur Längsachse A verlaufende Anschlagleiste 21 ausgebildet und an den Seitenflächen 17 und 18 jeweils eine Anschrägung 23 angearbeitet ist.

Der Spanneinsatz 11 ist mittels des Spannzahnes 14, wie dies der Figur 3 zu entnehmen ist, mit dem Werkstück 10 formschlüssig und über den Anschlag 15 reibschlüssig verbunden, so dass stets eine zufriedenstellende Mitnahme gewährleistet ist. Da der Anschlag 15 plan auf dem Werkzeug 10 anliegt, kann der Spannzahn 14 auch bei hoher Krafteinwirkung nur begrenzt in das Werkstück 10 entsprechend des Überstandes über den Anschlag 15 eindringen, dieses wird demnach durch den Spannzahn 14 nicht wesentlich verformt. Und da die Höhe des Überstandes und damit die Eindringtiefe gewählt werden kann, ist eine Anpassung durch Auswechseln der Spanneinsätze 11 an die jeweils einzuspannenden Werkstücke leicht vorzunehmen.

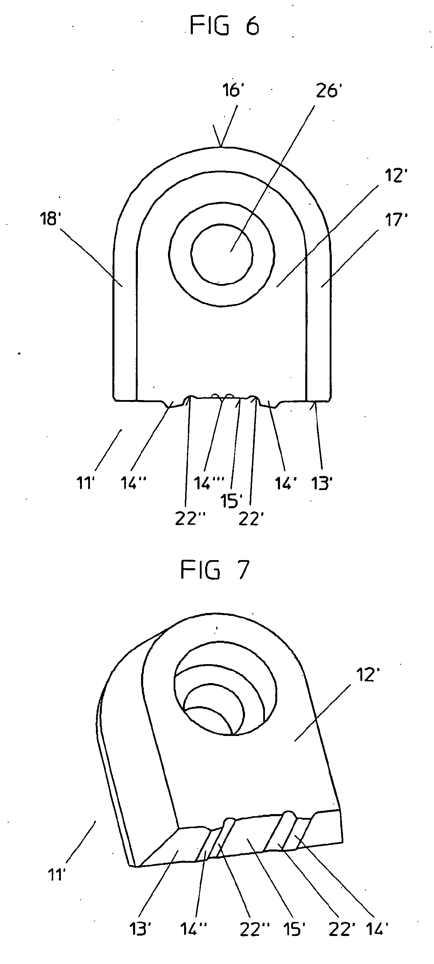

Der in den Figuren 6 und 7 dargestellte Spanneinsatz 11' ist an der dem einzuspannenden Werkstück zugekehrten Fläche 13' mit zwei mit seitlichem Abstand zueinander angeordnete Spannzähnen 14' und 14" ausgestattet, die achsparallel zur Längsachse (A) des Spanneinsatzes 11' verlaufen und als Zahnleisten ausgebildet sind. Zwischen den Spannzähnen 14' und 14" ist der gegenüber diesen zurückgesetzte Anschlag 15' vorgesehen. Gemäß der in geringerer Strichstärke in Figur 6 eingezeichneter Darstellung kann der Spanneinsatz 11' alternativ aber auch nur einen Spannzahn 14'" aufweisen, der mittig an dem Grundkörper 12' angearbeitet ist.

Die dem einzuspannenden Werkstück zugekehrten Flächen der Spannzähne 14' und 14" sowie des Anschlage 15' sind konvex gekrümmt ausgebildet, so dass jeweils eine große Anlagefläche an dem Werkstück gegeben ist. Die äußeren Teile der Stirnfläche 13' verlaufen dagegen plan. Die Ausgestaltung des Spanneinsatzes 11' ist besonders zur Übertragung hoher Drehmomente geeignet, da große Kontaktflächen sowohl der Spannzähne 14', 14" als auch des Anschlages 15' gegeben sind.

Die beiden Seitenflächen 17' und 18' des Grundkörpers 12' wie auch dessen Zylinderfläche 16' und die in diesen eingearbeitete Bohrung 26' sind in gleicher Weise gestaltet wie bei dem Spanneinsatz 11. Außerdem sind zwischen den Spannzähnen 14', 14" und dem Anschlag 15' ebenfalls in Richtung der Längsachse A des Spanneinsatzes 11' verlaufende Freiräume 22' und 22" in Form von Hohlkehlen vorgesehen.

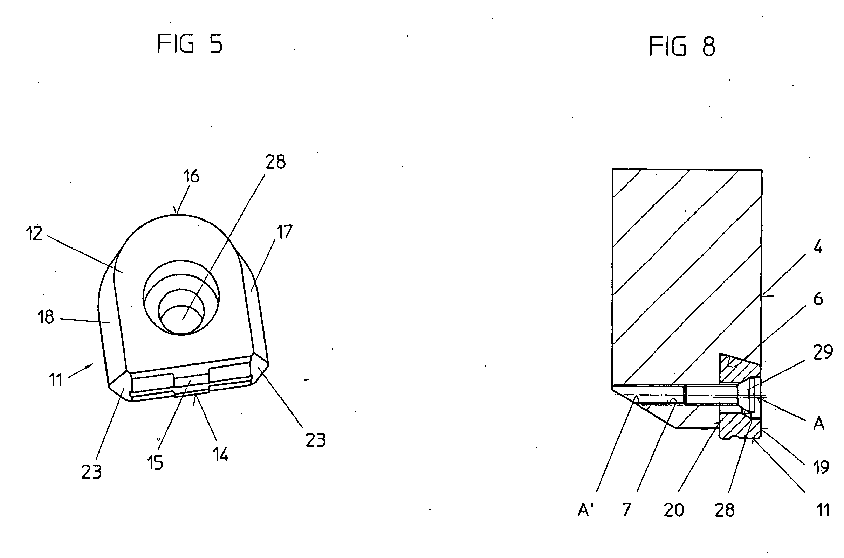

Gemäß der Darstellung in Figur 8 ist der Spanneinsatz 11 mittels einer Torx-Schraube 29, die in einer mit einer kegelstumpfartigen Anlagefläche versehenen Durchgangsbohrung 28 abgestützt und in die Gewindebohrung 7 eingeschraubt ist, an dem Spannbacken 4 befestigt. Außerdem ist die Längsachse A' der Gewindebohrung 7 geringfügig radial nach außen gegenüber der Längsachse A der Bohrung 28 versetzt angeordnet. Auf diese Weise wird der Spanneinsatz 11 insbesondere mit der zylindrischen Fläche 16 fest gegen den Spannbacken 11 gepresst, eine spielfreie Anlage ist somit sichergestellt.

Um den Rundlauf der Spannbacken 4 des Spannfutters 2 einstellen zu können, ist, wie dies der Figur 1 zu entnehmen ist, an den Grundbacken 3 jeweils ein Querkeil 8 angeformt, und in einer in die Spannbacken 4 eingearbeiteten zugeordneten Ausnehmung 9 ist ein als U-förmige Schiene 32 ausgebildetes Einsatzstück 31 eingesetzt, das mittels einer Schraube 33 auswechselbar mit dem Spannbacken 4 verbunden ist. Mit Hilfe eines in die Spanneinsätze 11 einzuspannendes Master-Zylinders 34 und einer Messuhr 35 können Abweichungen des Rundlaufes bestimmt werden, durch Austausch der Spanneinsätze 31, die unterschiedlich stark bemessene Schenkel aufweisen, ist eine eventuelle Unwucht auszugleichen.

Der Grundkörper 12 des Spanneinsatzes 11 besteht aus hochlegiertem gehärtetem Werkzeugstahl und ist aus einem Rohling, aus dem auf der Stirnseite 13 der Spannzahn 14, die Anschlagleiste 15 sowie der Freiraum 22 durch Funkenerosion herausgearbeitet sind, gefertigt. Außerdem ist zumindest die Stirnfläche 13 mit dem Spannzahn 14, der Anschlagleiste 15 und dem Freiraum 22 mit einer reibmindernden Beschichtung 30 versehen.

## Patentansprüche

1. Spanneinsatz (11,11') für Spannbacken (4) von Spannvorrichtungen (1), insbesondere von Spannfuttern (2), der aus einem in einer in den Spannbacken (4) eingearbeiteten Ausnehmung (6) einsetzbaren und lösbar mit diesem verbindbaren Grundkörper (12, 12') besteht, an dem ein oder mehrere über die Spannfläche vorstehende auf ein Werkstück (10) einwirkende Spannzähne (14, 14', 14", 14"') angeformt sind, wobei der Grundkörper (12, 12') verdrehfest in der Ausnehmung (6) des Spannbackens (4) abgestützt ist,
**dadurch gekennzeichnet,**
**dass** der Grundkörper (12, 12') auf der mit einem oder mehreren Spannzähnen (14, 14', 14", 14"') versehenen dem einzuspannenden Werkstück (10) zugewandten Stirnfläche (13, 13') eine gegenüber diesen zurückgesetzte als Anschlag (15, 15') ausgebildete Anlagefläche aufweist.

2. Spanneinsatz nach Anspruch 1,
**dadurch gekennzeichnet,**
**dass** der Grundkörper (12, 12') des Spanneinsatzes (11, 11') in Form eines Quaders ausgebildet und in einer an diesen angepassten in den Spannbacken (4) eingearbeiteten Ausnehmung (6) eingesetzt ist.

3. Spanneinsatz nach Anspruch 2,
**dadurch gekennzeichnet,**
**dass** die der mit dem Anschlag (15, 15') versehenen Stirnfläche (13, 13') gegenüber liegende Außenfläche des Grundkörpers (12, 12') durch eine die beiden Seitenflächen (17, 18 bzw. 17', 18') verbindende Zylinderfläche (16, 16') gebildet ist.

4. Spanneinsatz nach Anspruch 3,
**dadurch gekennzeichnet,**
**dass** die beiden Seitenflächen (17, 18 bzw. 17', 18') und die Zylinderfläche (16, 16') des Grundkörpers (11, 11') in Richtung der vorderen Stirnfläche (19) des Spanneinsatzes (11, 11') sich stetig verjüngend ausgebildet sind.

5. Spanneinsatz nach Anspruch 4,
**dadurch gekennzeichnet,**
**dass** die Seitenflächen (17, 18 bzw. 17', 18') und die Zylinderfläche (16, 16') des Grundkörpers (12, 12') unter einem Winkel β von 10 bis 20 °, vorzugsweise von ca. 15 °, geneigt verlaufend ausgebildet sind.

6. Spanneinsatz nach einem oder mehreren
der Ansprüche 1 bis 5,
**dadurch gekennzeichnet,**
**dass** der Anschlag (15) des Grundkörpers (12) ausgehend von der vorderen Stirnfläche (19) des Spanneinsatzes (11) vor den Spannzähnen (14) angeordnet ist.

7. Spanneinsatz nach Anspruch 6,
**dadurch gekennzeichnet,**
**dass** der Anschlag (15) des Grundkörpers (12) durch eine Anschlagleiste (21) gebildet ist, die mit Abstand zu der vorderen Stirnfläche (19) des Grundkörpers (12) und achssenkrecht zur Längsachse (A) des Spanneinsatzes (11) verläuft.

8. Spanneinsatz nach einem oder mehreren
der Ansprüche 1 bis 7,
**dadurch gekennzeichnet,**
**dass** die Spannzähne (14) in Richtung der Längsachse (A) des Grundkörpers (12) im Querschnitt in Form eines Trapezes oder dreieckförmig ausgebildet sind.

9. Spanneinsatz nach Anspruch 8,
**dadurch gekennzeichnet,**
**dass** die der vorderen Stirnfläche (19) des Spanneinsatzes (11) zugewandte Zahnfläche (24) der Spannzähne (14) unter einem stumpfen Winkel α und die der rückseitigen Anlagefläche (20) des Spanneinsatzes (11) zugewandte Stirnfläche (25) der Spannzähne (14) unter einem spitzen Winkel β gegenüber dem Anschlag (15) geneigt verlaufend ausgebildet sind.

10. Spanneinsatz nach Anspruch 9,
**dadurch gekennzeichnet,**
**dass** die Neigungswinkel α und β der Zahnflächen (24, 25) etwa 75 ° bis 85 ° bzw. etwa 25 ° und 35 ° betragen.

11. Spanneinsatz nach einem oder mehreren
der Ansprüche 1 bis 7,
**dadurch gekennzeichnet,**
**dass** die Spannzähne (14', 14" bzw. 14"') des Grundkörpers (11') durch eine oder mehrere achsparallel zur Längsachse (A) des Spanneinsatzes (11') verlaufende durchgehende oder unterbrochene Zahnleisten gebildet sind.

12. Spanneinsatz nach Anspruch 11,
**dadurch gekennzeichnet,**
**dass** die Spannzähne (14"') des Grundkörpers (12') durch eine mittig an der dem einzuspannenden Werkstück zugewandten Stirnfläche (13') des Spanneinsatzes (11') vorgesehene Zahnleiste gebildet sind.

13. Spanneinsatz nach Anspruch 11,
**dadurch gekennzeichnet,**
**dass** die Spannzähne (14', 14") des Grundkörpers (12') durch zwei mit seitlichem Abstand zueinander angeordnete und achsparallel zur Längsachse (A) des Spanneinsatzes (11') verlaufende Zahnleisten gebildet sind.

14. Spanneinsatz nach einem oder mehreren
der Ansprüche 11 bis 13,
**dadurch gekennzeichnet,**
**dass** die dem einzuspannenden Werkstück zugewandten Stirnflächen der Spannzähne (14, 14' bzw. 14") ganz oder teilweise konvex gekrümmt ausgebildet sind.

15. Spanneinsatz nach einem oder mehreren
der Ansprüche 11 bis 14,
**dadurch gekennzeichnet,**
**dass** die dem Werkstück zugekehrte Stirnfläche (13') des Spanneinsatzes (11') ein- oder beidseits der Spannzähne (14', 14" bzw. 14") und/oder zwischen diesen als konvex gekrümmte Anlagefläche ausgebildet ist.

16. Spanneinsatz nach Anspruch 15,
**dadurch gekennzeichnet,**
**dass** bei zwei mit seitlichem Abstand zueinander an der Stirnfläche (13') des Spanneinsatzes (11') vorgesehenen Spannzähnen (14', 14") zwischen diesen eine konvex gekrümmte Anlagefläche als Anschlag (15) vorgesehen ist.

17. Spanneinsatz nach einem oder mehreren
der Ansprüche 6 bis 16,
**dadurch gekennzeichnet,**
**dass** zwischen den Spannzähnen (14) und der Anschlagleiste (21) und bzw. den als Zahnleisten ausgebildeten Spannzähnen (14', 14") und dem Anschlag (15') ein senkrecht zur Längsachse (A) des Spanneinsatzes (11) bzw. parallel zu dieser verlaufend ein Freiraum (22 bzw. 22', 22") vorgesehen ist, der gegenüber dem Anschlag (15, 15') zurückgesetzt, vorzugsweise als Hohlkehle ausgebildet ist.

18. Spanneinsatz nach eine oder mehreren
der Ansprüche 6 bis 17,
**dadurch gekennzeichnet,**
**dass** die Spannzähne (14) und die senkrecht zur Achsrichtung (A) des Spanneinsatzes (11) verlaufende Anschlagleiste (21) durch seitliche an den Grundkörper (12) angearbeitete Abschrägungen (23) freigespart sind.

19. Spanneinsatz nach einem oder mehreren
der Ansprüche 1 bis 18,
**dadurch gekennzeichnet,**
**dass** der Spanneinsatz (11) mittels einer in einer mit einer kegelstumpfartig ausgebildeten Anlagefläche versehenen Bohrung (28) abgestützten und in eine in den Spannbacken (4) eingearbeiteten Gewindebohrung (7) eingreifenden Torx-Schraube (29) an diesem befestigt ist.

20. Spanneinsatz nach Anspruch 19,
**dadurch gekennzeichnet,**
**dass** die Längsachse (A') der in dem Spannbacken (4) vorgesehenen Gewindebohrung (7) geringfügig gegenüber der Längsachse (A) der Bohrung (28) des in dem Spannbacken (4) abgestützten Spanneinsatzes (11) radial nach außen versetzt angeordnet ist.

21. Spanneinsatz nach einem oder mehreren
der Ansprüche 1 bis 20,
**dadurch gekennzeichnet,**
**dass** der den Spanneinsatz (11) aufnehmende Spannbacken (4) eines Spannfutters (2) zur Einstellung des Backenrundlaufes mit einem Einsatzstück (31) versehen ist, über das der Spannbacken (4) auf einem an einem zugeordneten Grundkörper (3) vorgesehenen Querkeil (8) abgestützt ist.

22. Spanneinsatz nach Anspruch 19,
**dadurch gekennzeichnet,**
**dass** das Einsatzstück (31) aus einer im Querschnitt U-förmig ausgebildeten Schiene (32) besteht und in einer auf der dem Querkeil (8) abgekehrten Rückseite des Spannbackens (4) in diesen eingearbeiteten Ausnehmung (9) eingesetzt und mittels einer Spannschraube (33) mit dem Spannbacken (4) auswechselbar verbunden ist.

23. Spanneinsatz nach einem oder mehreren
der Ansprüche 1 bis 21,
**dadurch gekennzeichnet,**
**dass** der Spanneinsatz (11) zumindest auf der dem einzuspannenden Werkstück (10) zugekehrten Stirnfläche (13) mit einer reibmindernden Beschichtung (30), beispielsweise Titan-Nitrit, versehen ist.

24. Spanneinsatz nach einem oder mehreren
der Ansprüche 1 bis 12,
**dadurch gekennzeichnet,**
**dass** der Grundkörper (12) des Spanneinsatzes (11) aus hochlegiertem gehärteten Werkzeugstahl besteht und dass die Spannzähne (14) sowie die Anschlagleiste (21) und der Freiraum (22) auf der dem einzuspannenden Werkstück (10) zugekehrten Stirnseite (13) durch Funken-Erosion aus einem Rohling herausgearbeitet sind.

## Claims

1. A clamping-claw insert (11,11') for the clamping jaws (4) of clamping fixtures (1), in particular chucks (2), comprising a base element (12, 12') that can be inserted in a recess (6) worked into the clamping jaws (4) and can be connected to this in a releasable connection and onto which are formed one or more clamping teeth (14, 14', 14", 14"') that project beyond the clamping surface and act on a workpiece (10), with the base element (12, 12') is supported in the recess (6) of the clamping jaw (4) so that it cannot rotate,
**characterized in that,**
the base element (12, 12') has a contact surface on the end surface (13, 13') facing the workpiece (10) to be clamped that is provided with one or more clamping teeth (14, 14', 14", 14"'), the contact surface being set back in relation to the clamping teeth and formed as a stop (15, 15').

2. The clamping-claw insert in accordance with Claim 1,
**characterized in that,**
the base element (12, 12') of the clamping-claw insert (11, 11') has the shape of a block and is inserted into a recess (6) adapted to the block and worked into the clamping jaw (4).

3. The clamping-claw insert in accordance with Claim 2,
**characterized in that,**
the external surface of the base element (12, 12') facing the end surface (13, 13') provided with the stop (15, 15') is formed by a cylindrical surface (16, 16') connecting the two lateral surfaces (17, 18 or 17', 18').

4. The clamping-claw insert in accordance with Claim 3,
**characterized in that,**
the two lateral surfaces (17, 18 or 17', 18') and the cylindrical surface (16, 16') of the base element (12, 12') taper continuously in the direction of the front end surface (19) of the clamping-claw insert (11, 11').

5. The clamping-claw insert in accordance with Claim 4,
**characterized in that,**
the lateral surfaces (17, 18 or 17', 18') and the cylindrical surface (16, 16') of the base element (12, 12') taper at an angle β of 10 to 20°, the preferred value being approx. 15°.

6. The clamping-claw insert in accordance with one or more
of Claims 1 to 5,
**characterized in that,**
the stop (15) of the base element (12) is arranged starting from the front end surface (19) of the clamping-claw insert (11) in front of the clamping teeth (14).

7. The clamping-claw insert in accordance with Claim 6,
**characterized in that,**
the stop (15) of the base element (12) is formed by a stop bar (21) running at a distance from the front end surface (19) of the base element (12) and perpendicular to the longitudinal axis (A) of the clamping-claw insert (11).

8. The clamping-claw insert in accordance with one or more
of Claims 1 to 7,
**characterized in that,**
the clamping teeth (14) are formed with a trapezoidal or triangular cross section in the direction of the longitudinal axis (A) of the base element (12).

9. The clamping-claw insert in accordance with Claim 8,
**characterized in that,**
the tooth surface (24) of the clamping teeth (14) facing towards the front end surface (19) of the clamping-claw insert (11) run at an obtuse angle a and the end surface (25) of the clamping teeth (14) facing towards the rear contact surface (20) of the clamping-claw insert (11) run at an acute angle β in relation to the stop (15).

10. The clamping-claw insert in accordance with Claim 9,
**characterized in that,**
the inclination angles a and β of the tooth surfaces (24, 25) are about 75° to 85° or about 25° and 35° respectively.

11. The clamping-claw insert in accordance with one or more
of Claims 1 to 7,
**characterized in that,**
the clamping teeth (14', 14" or 14"') of the base element (12') are formed by one or more continuous or interrupted toothed bars running with their axes in parallel to the longitudinal axis (A) of the clamping-claw insert (11').

12. The clamping-claw insert in accordance with Claim 11,
**characterized in that,**
the clamping teeth (14"') of the base element (12') are formed by a toothed bar provided in the centre of the end surface (13') of the clamping-claw insert (11') facing towards the workpiece to be clamped.

13. The clamping-claw insert in accordance with Claim 11,
**characterized in that,**
the clamping teeth (14"') of the base element (12') are formed by two toothed bars arranged at a lateral distance from one another and with their axes running in parallel to the longitudinal axis (A) of the clamping-claw insert (11').

14. The clamping-claw insert in accordance with one or more
of Claims 11 to 13,
**characterized in that,**
the end surfaces of the clamping teeth (14, 14' or 14") facing towards the workpiece to be clamped are formed with a wholly or partially convex curvature.

15. The clamping-claw insert in accordance with one or more
of Claims 11 to 14,
**characterized in that,**
the end surface (13') of the clamping-claw insert (11') facing towards the workpiece is formed on one or both sides of the clamping teeth (14', 14" or 14") and/or between the clamping teeth (14', 14" or 14") as a contact surface with a convex curvature.

16. The clamping-claw insert in accordance with Claim 15,
**characterized in that,**
when there are two clamping teeth (14', 14") provided at a lateral distance from one another on the end surface (13') of the clamping-claw insert (11'), a contact surface with a convex curvature is provided in between them as a stop (15).

17. The clamping-claw insert in accordance with one or more
of Claims 6 to 16,
**characterized in that,**
a cavity (22 or 22', 22") is provided between the clamping teeth (14) and the stop bar (21) or between the clamping teeth (14', 14") configured as toothed bars and the stop (15'), this cavity (22 or 22', 22") running perpendicular or parallel to the longitudinal axis (A) of the clamping-claw insert (11), recessed in relation to the stop (15, 15') and, in a preferred embodiment, formed as a groove.

18. The clamping-claw insert in accordance with one or more
of Claims 6 to 17,
**characterized in that,**
the clamping teeth (14) and the stop bar (21) running perpendicular to the axial direction (A) of the clamping-claw insert (11) are recessed by means of bevels (23) machined into the base element (12).

19. The clamping-claw insert in accordance with one or more
of Claims 1 to 18,
**characterized in that,**
the clamping-claw insert (11) is attached to the clamping jaw (4) by means of a Torx bolt (29) supported in a hole (28) provided with a contact surface that has a truncated conical shape and engaging in a threaded hole (7) worked into the clamping jaw (4).

20. The clamping-claw insert in accordance with Claim 19,
**characterized in that,**
the longitudinal axis (A') of the threaded hole (7) provided in the clamping jaw (4) is offset slightly outwards in a radial direction in relation to the longitudinal axis (A) of the hole (28) of the clamping-claw insert (11) supported in the clamping jaw (4).

21. The clamping-claw insert in accordance with one or more
of Claims 1 to 20,
**characterized in that,**
in order to set the jaw concentricity, the clamping jaw (4) of a chuck (2) accommodating the clamping-claw insert (11) is provided with an insert (31) by means of which the clamping jaw (4) is supported on a cotter (8) provided on an assigned base element (3).

22. The clamping-claw insert in accordance with Claim 19,
**characterized in that,**
the insert (31) consists of a rail (32) formed with a U-shaped cross section that is inserted in a recess (9) worked onto the back of the clamping jaw (4) facing away from the cotter (8) and is connected to the clamping jaw (4) in an exchangeable connection by means of a clamping screw (33).

23. The clamping-claw insert in accordance with one or more
of Claims 1 to 21,
**characterized in that,**
the clamping-claw insert (11) is provided with a friction-reducing coating (30), for example titanium nitrite, on at least the end surface (13) facing towards the workpiece (10) to be clamped.

24. The clamping-claw insert in accordance with one or more
of Claims 1 to 12,
**characterized in that,**
the base element (12) of the clamping-claw insert (11) is made of a high-alloy hardened tool steel and the clamping teeth (14) as well as the stop bar (21) and the cavity (22) on the end surface (13) facing towards the workpiece (10) to be clamped are machined out of one blank by means of electrical discharge machining.

## Revendications

1. Insert de serrage (11, 11') pour mors de serrage (4) de dispositifs de serrage (1), en particulier de mandrins de serrage (2), consistant en un corps élémentaire (12, 12') se laissant monter de manière détachable dans un évidement (6) prévu dans le mors de serrage (4), sur lequel sont formées une ou plusieurs dents de serrage (14, 14', 14", 14"') saillant de la face de serrage et agissant sur une pièce à usiner (10), où le corps élémentaire (12, 12') est retenu de manière non rotative dans l'évidement (6) du mors de serrage (4),
**caractérisé en ce que**
sur la face frontale (13, 13') munie d'une ou de plusieurs dents de serrage (14, 14', 14", 14"') et donnant sur la pièce à usiner serrée (10), le corps élémentaire (12, 12') comporte une face de portée en retrait par rapport à celle-ci et conçue en tant que butée (15, 15').

2. Insert de serrage d'après la revendication 1,
**caractérisé en ce que**
le corps élémentaire (12, 12') de l'insert de serrage (11, 11') est conçu sous la forme d'un cube et inséré dans un évidement (6) adapté à celui-ci et pratiqué dans le mors de serrage (4).

3. Insert de serrage d'après la revendication 2,
**caractérisé en ce que**
la face extérieure du corps élémentaire (12, 12') opposée à la face frontale (13, 13') munie de la butée (15, 15') est réalisée par un surface cylindrique (16, 16') liant les deux faces latérales (17, 18 ou 17', 18').

4. Insert de serrage d'après la revendication 3,
**caractérisé en ce que**
les deux faces latérales (17, 18 ou 17', 18') et la surface cylindrique (16, 16') du corps élémentaire (11, 11') ont une section constamment décroissante en direction de la face frontale avant (19) de l'insert de serrage (11, 11').

5. Insert de serrage d'après la revendication 4,
**caractérisé en ce que**
les deux faces latérales (17, 18 ou 17', 18') et la surface cylindrique (16, 16') du corps élémentaire (12, 12') sont conçues sous un angle β d'entre 10° et 20°, de préférence sous une inclinaison d'env. 15°.

6. Insert de serrage d'après une ou plusieurs des revendications 1 à 5,
**caractérisé en ce que**
depuis la face frontale avant (19) de l'insert de serrage (11), la butée (15) du corps élémentaire (12) est disposée devant les dents de serrage (14).

7. Insert de serrage d'après la revendication 6,
**caractérisé en ce que**
la butée (15) du corps élémentaire (12) est conçue sous la forme d'une réglette de butée (21) prévue avec écartement par rapport à la face frontale avant (19) du corps élémentaire (12) et perpendiculairement à l'axe longitudinal (A) de l'insert de serrage (11).

8. Insert de serrage d'après une ou plusieurs des revendications 1 à 7,
**caractérisé en ce que**
les sections des dents de serrage (14) en direction de l'axe longitudinal (A) du corps élémentaire (12) sont conçues sous la forme d'un trapèze ou sous la forme triangulaire.

9. Insert de serrage d'après la revendication 8,
**caractérisé en ce que**
la face dentée (24) des dents de serrage (14) opposée à la face frontale avant (19) de l'insert de serrage (11) est réalisée sous un angle obtus a, et la face frontale (25) des dents de serrage (14) opposée à la face de butée arrière (20) de l'insert de serrage (11) sous un angle aigu β par rapport à la butée (15).

10. Insert de serrage d'après la revendication 9,
**caractérisé en ce que**
les angles d'inclinaison a et β des faces dentées (24, 25) s'élèvent à env. 75°-85° ou à env. 25°-35°.

11. Insert de serrage d'après une ou plusieurs des revendications 1 à 7,
**caractérisé en ce que**
les dents de serrage (14', 14" ou 14"') du corps élémentaire (11') sont formées par une ou plusieurs crémaillères continues ou interrompues et orientées parallèlement à l'axe longitudinal (A) de l'insert de serrage (11').

12. Insert de serrage d'après la revendication 11,
**caractérisé en ce que**
les dents de serrage (14"') du corps élémentaire (12') sont formées par une crémaillère prévue au centre de la face frontale (13') de l'insert de serrage (11') donnant sur la pièce à usiner serrée.

13. Insert de serrage d'après la revendication 11,
**caractérisé en ce que**
les dents de serrage (14', 14") du corps élémentaire (12') sont formées par deux crémaillères disposées à une certaine distance l'une de l'autre et orientées parallèlement à l'axe longitudinal (A) de l'insert de serrage (11').

14. Insert de serrage d'après une ou plusieurs des revendications 11 à 13,
**caractérisé en ce que**
les faces frontales des dents de serrage (14', 14" ou 14"') donnant sur la pièce à usiner serrée sont réalisées entièrement ou partiellement convexes.

15. Insert de serrage d'après une ou plusieurs des revendications 11 à 14,
**caractérisé en ce que**
sur un ou sur les deux côtés des dents de serrage (14', 14" ou 14"') et/ou entre celles-ci, la face frontale (13') de l'insert de serrage (11') donnant sur la pièce à usiner serrée est réalisée sous la forme d'une face de portée convexe.

16. Insert de serrage d'après la revendication 15,
**caractérisé en ce que,**
en cas de deux dents de serrage (14', 14") prévues à une certaine distance l'une de l'autre sur la face frontale (13') de l'insert de serrage (11'), il est prévu en tant que butée (15) entre celles-ci une face de portée convexe.

17. Insert de serrage d'après une ou plusieurs des revendications 6 à 16,
**caractérisé en ce**
**qu'**entre les dents de serrage (14) et la réglette de butée (21) ou entre les dents de serrage (14', 14") conçues en tant que crémaillères et la butée (15'), il est prévu perpendiculairement à l'axe longitudinal (A) de l'insert de serrage (11') ou parallèlement à celui-ci, un espace libre (22 ou 22', 22") réalisé en retrait par rapport à la butée (15, 15') et de préférence sous la forme d'un congé.

18. Insert de serrage d'après une ou plusieurs des revendications 6 à 17,
**caractérisé en ce que**
les dents de serrage (14) et la réglette de butée (21) orientée perpendiculairement à l'axe longitudinal (A) de l'insert de serrage (11) sont réalisées sous la forme de chanfreins latéraux (23) pratiqués sur le corps élémentaire (12).

19. Insert de serrage d'après une ou plusieurs des revendications 1 à 18,
**caractérisé en ce que**
moyennant une vis à tête cylindrique à six pans creux (29), appuyée dans un alésage (28) comportant une face de butée tronconique, et entrant dans un alésage fileté (7) pratiqué dans le mors de serrage (4), l'insert de serrage (11) est fixé sur celui-ci.

20. Insert de serrage d'après la revendication 19,
**caractérisé en ce que**
par rapport à l'axe longitudinal (A) de l'alésage (28) de l'insert de serrage (11) appuyé dans le mors de serrage (4), l'axe longitudinal (A') de l'alésage fileté (7) prévu dans le mors de serrage (4) est légèrement déplacé en direction radiale vers l'extérieur.

21. Insert de serrage d'après une ou plusieurs des revendications 1 à 20,
**caractérisé en ce que**
pour le réglage de la concentricité du mors, le mors de serrage (4) d'un mandrin de serrage (2) logeant l'insert de serrage (11) est muni d'un élément (31) par l'intermédiaire duquel le mors de serrage (4) est appuyé sur un coin transversal (8) prévu sur un corps élémentaire assigné (3).

22. Insert de serrage d'après la revendication 19,
**caractérisé en ce que**
l'élément (31) consiste en une glissière dont la section transversale a la forme d'un U, qu'il est inséré dans un évidement (9) pratiqué dans la face du mors de serrage (4) éloignée du coin transversal (8) et que moyennant une vis de serrage (33), il est fixé de manière échangeable sur le mors de serrage (4).

23. Insert de serrage d'après une ou plusieurs des revendications 1 à 21,
**caractérisé en ce que,**
du moins sur la face frontale (13) donnant sur la pièce à usiner serrée (10), l'insert de serrage (11) est revêtu d'une couche (30) diminuant la friction, p. ex. en nitrure de titane.

24. Insert de serrage d'après une ou plusieurs des revendications 1 à 12,
**caractérisé en ce que**
le corps élémentaire (12) de l'insert de serrage (11) consiste en acier à outils trempé et fortement allié, et que sur la face frontale (13) donnant sur la pièce à usiner serrée (10), les dents de serrage (14), la réglette de butée (21) et l'espace libre (22) sont pratiqués par étincelage à partir d'une ébauche.
